# EUROPÄISCHE PATENTSCHRIFT

(11) **EP 3 357 383 B1**
(45) Veröffentlichungstag und Bekanntmachung des Hinweises auf die Patenterteilung: **30.10.2019**
(21) Anmeldenummer: 17154469.5
(22) Anmeldetag: 02.02.2017
(51) Int. Cl.: A47J 47/06

(54) **SCHÜTTBEHÄLTER ZUR AUFBEWAHRUNG RIESELFÄHIGER LEBENSMITTEL**
BULK CONTAINER FOR STORING FREE-FLOWING FOOD
CONTENEUR DESTINÉ À STOCKER DES PRODUITS ALIMENTAIRES COULANT

(43) Veröffentlichungstag der Anmeldung: 08.08.2018
(73) Patentinhaber: keeeper GmbH, 32351 Stemwede (DE)
(72) Erfinder: Dumler, Alex, 20359 Hamburg (DE); Witt, Florian M., 21465 Wentorf (DE); Königsberger, Johanna, 22765 Hamburg (DE); Hecker, Matthias, 22609 Hamburg (DE); Plate, Torsten, 22089 Hamburg (DE); Ferrier, Andrew, Ottawa, Ontario, K2K 2N1 (CA)
(74) Vertreter: Weeg, Thomas

(56) Entgegenhaltungen:
- EP-A1- 1 148 804
- EP-A1- 1 468 933
- EP-A2- 1 775 232
- WO-A1-2011/096814
- GB-A- 1 237 542

## Beschreibung

Die vorliegende Erfindung bezieht sich auf einen Schüttbehälter zur Aufbewahrung rieselfähiger Lebensmittel nach dem Oberbegriff des Anspruchs 1.

Ein gattungsgemäßer Schüttbehälter ist aus der Schrift WO 2011/096814 bekannt. Als Verschluss ist ein mittiger Dorn vorgesehen, der sich vom Boden durch den Innenraum des Behälters hindurch nach oben bis in den Bereich der Stulpe erstreckt und an den die Stulpe angelegt werden kann. Durch den Dorn geht ein erheblicher Teil des Füllvolumens des Behälters verloren. Die Befüllung und Entleerung des Behälters muss immer um den Dorn herum erfolgen, was sehr unpraktisch ist.

Aus den Schriften EP 1 468 933 B1 und EP 1 775 232 A2 sind gattungsgemäße Behälter mit flexiblen deckelartigen Verschlüssen bekannt, die mit Druckausgleichsventilen versehen sind. Die Ventilkörper sind im Verhältnis zum übrigen Verschluss beweglich. Um die Behälter befüllen und entleeren zu können, müssen jeweils die deckelartigen Verschlüsse vollständig abgenommen und wieder aufgesetzt werden.

Ein anderer Schüttbehälter ist aus der Schrift DE 298 04 369 U1 bekannt. Der Schüttbehälter dient insbesondere dazu, schüttfähige Lebensmittel wie Cerealien zu lagern und präsentieren. Es können darin aber auch andere schüttfähige Lebensmittel gelagert werden, wie beispielsweise Zucker, Mehl, Gewürze und andere Lebensmittel. Auch cremige oder flüssige Lebensmittel können in dem Schüttbehälter gelagert werden. Der Behälter verfügt über eine geneigt verlaufende Entnahmeöffnung und ein verschwenkbares Dichtelement. Die Befüllung des Schüttbehälters durch die Entnahmeöffnung gestaltet sich allerdings schwierig. Außerdem dichtet das Dichtelement den Aufbewahrungsraum nicht optimal nach außen hin ab.

Es ist die Aufgabe der vorliegenden Erfindung, die Befüllbarkeit und die Dichtheit des Aufbewahrungsraums des Behälters zu verbessern.

Die Aufgabe wird für einen gattungsgemäßen Schüttbehälter mit den kennzeichnenden Merkmalen des Anspruchs 1 gelöst.

Der elastische Werkstoff der Stulpe sollte von seinem Material und seiner Materialstärke her so beschaffen sein, dass er eine ausreichende Biegesteifigkeit aufweist, um seine jeweils vom Benutzer eingestellte Position zumindest in den Endlagen beizubehalten, ohne sich zu verstellen. Die Endlagen sind die in den Aufbewahrungsraum eingedrückte und die aus dem Aufbewahrungsraum herausgezogene Stellung der Stulpe. Der elastische Werkstoff sollte aber auch noch so weich sein, dass die Stulpe von einem Benutzer leicht in den Aufbewahrungsraum hineingedrückt, aber auch leicht wieder herausgezogen werden kann. Auch die Maße der Stulpe sind so bemessen, dass sich der Befülltrichter und der Schütttrichter nach der Verlagerung der Stulpe gut ausbilden.

In der eingedrückten Stellung hat die Stulpe eine Trichterform mit der am zweiten Ende ausgebildeten Öffnung, die im Aufbewahrungsraum mündet. Der Schüttbehälter kann über die Stulpe sehr einfach befüllt werden, indem das rieselfähige Lebensmittel einfach auf die nach außen hin freie Fläche der Stulpe geschüttet wird. Durch die Trichterform rutschen alle Partikel des Lebensmittels, die auf die Stulpe auftreffen, schwerkraftbedingt auf die Öffnung zu und fallen von dort aus in das Innere des Aufbewahrungsraums. Der Transportbehälter, aus dem das rieselfähige Lebensmittel in den Schüttbehälter umgefüllt wird, muss deshalb nicht mehr genau über der Öffnung gehalten werden. Auch die Zuführmenge des auf die Stulpe geschütteten Lebensmittels kann schwanken, weil der von der Stulpe gebildete Trichter einen Pufferspeicher bildet, in dem sich bei einer zu großen Zuführmenge das Lebensmittel im Trichter ansammelt und bei einer Verringerung der Zuführmenge wieder durch die Öffnung abfließt. Der Benutzer kann die Dosierung der ausgeschütteten Menge des Lebensmittels gut an die aktuell im Trichter befindliche Menge des Lebensmittels anpassen, weil die Dosierbedürfnisse gut erkennbar sind.

Wenn die Stulpe aus dem Aufbewahrungsraum herausgezogen ist, bildet die Stulpe in der Seitenansicht eine Art Kegelstumpf, der sich nach oben zur Öffnung hin verjüngt und über die obere Kante der seitlichen Wandung übersteht. Die Stulpe bildet auf diese Weise einen sich auf die Öffnung zu verengenden Schütttrichter, mit dem das im Aufbewahrungsraum befindliche Lebensmittel kontrolliert durch die Öffnung hindurch ausgegeben werden kann. Mit dem Schütttrichter ist sowohl der Austrittsort als auch die Austrittsmenge des rieselfähigen Lebensmittels leichter kontrollierbar.

Das Dichtelement des Schüttbehälters ist in seiner Form und Größe an die Maße der Öffnung angepasst. Das Dichtelement kann in vielfältigen Ausführungen realisiert sein, beispielsweise als ein deckelartiges schraubbares Dichtelement, ein klemmend befestigtes Dichtelement, ein Stopfen, ein rastendes Dichtelement oder ein Dichtelement mit einem Dreh-/Drückverschluss.

Die Längsachse des Schüttbehälters erstreckt sich vom Boden des Schüttbehälters bis zu dessen oberem Ende. Die Lageänderung der Stulpe muss nicht genau entlang der Längsachse erfolgen, je nach geometrischer Form des Schüttbehälters und der Stulpe können sich aus geringfügige Abweichungen ergeben.

Um im Aufbewahrungsraum möglichst wenig Sauerstoff zu haben, der mit dem darin gelagerten Lebensmittel reagieren kann, ist es vorteilhaft, die Stulpe in den Aufbewahrungsraum hineinzudrücken. Der Aufbewahrungsraum wird dadurch verkleinert. Da der Aufbewahrungsraum zumindest teilweise mit dem Lebensmittel befüllt ist, wirkt sich die Raumreduzierung insbesondere auf das Volumen der Restmenge an Luft und damit auch auf das Sauerstoffvolumen aus, das sich neben dem Lebensmittel im Aufbewahrungsraum befindet. Wenn ein Lebensmittel in den Aufbewahrungsraum eingefüllt worden ist, ist es je nach Füllstand des Lebensmittels im Aufbewahrungsraum sogar möglich, die Stulpe bis auf die Oberfläche des Lebensmittels hinabzudrücken, so dass kaum noch Luft mit einem Sauerstoffanteil im Aufbewahrungsraum verbleibt. Dadurch kann die Frische und Dauerhaltbarkeit eines Lebensmittels im Aufbewahrungsraum erheblich verlängert werden.

Das Dichtelement ist als ein in die Öffnung einsetzbarer Stopfen ausgebildet, der einen Schaftabschnitt aufweist, dessen Form und Größe an die Form und Größe der Öffnung so angepasst ist, dass sich im Bereich des Schaftabschnitts eine dichtende Anlage der Oberfläche des Schaftabschnitts an die Oberflächen des an die Öffnung angrenzenden Materials der Stulpe einstellt. Der Stopfen kann schnell und leicht in die Öffnung eingesetzt und daraus wieder entfernt werden. Durch die dichtende Anlage des Schaftabschnitts an das Material der Stulpe entsteht zwischen den Oberflächen eine kraftschlüssige Verbindung, die auch dazu genutzt werden kann, um die Stulpe durch Ziehen oder Drücken am Dichtelement aus der eingedrückten Stellung in die herausgezogene Stellung zu verlagern, oder andersherum. Die Anpassung der Größe und der Form des Schaftabschnitts kann so aussehen, dass der Schaftabschnitt im Kontaktbereich zur Stulpe ein leichtes Übermaß zu dem Maß hat, das die Öffnung im entspannten Zustand des Materials der Stulpe im Bereich der Öffnung aufweist. Durch das Übermaß des Schaftabschnitts wird das Material der Stulpe bei eingestecktem Dichtelement im Bereich der Öffnung gedehnt, wodurch sich ein erhöhter Reibschluss im Kontaktbereich ergibt. Der erhöhte Reibschluss kann auch vorteilhaft sein, wenn im Inneren des Aufbewahrungsraums ein Unterdruck hergestellt werden soll.

Der Schaftabschnitt weist an seinem dem Aufbewahrungsraum zugewandten Ende eine Verdickung im Verhältnis zu seiner Form im Bereich der dichtenden Anlage des angrenzenden Materials der Stulpe auf. Durch die Verdickung ergibt sich bei eingestecktem Dichtelement eine Art Hinterschnitt hinter das im Bereich der dichtenden Anlage befindliche angrenzende Material der Stulpe. Dadurch sitzt das Dichtelement noch fester in seiner Verschlussposition, und die Qualität der Abdichtung ist nochmals verbessert. Auch können in der Verbindung höhere Zugkräfte zwischen dem Dichtelement und der Stulpe übertragen werden, so dass die Stulpe insbesondere noch besser aus der eingedrückten Stellung in die herausgezogene Stellung verlagert werden kann.

Nach einer Ausgestaltung der Erfindung ist die Stulpe formschlüssig mit der seitlichen Wandung des Schüttbehälters verbunden. Die Formschlüssigkeit kann beispielsweise über ein Schraubgewinde oder eine Verrastung hergestellt sein. Durch die formschlüssige Verbindung ist die Stulpe ausreichend fest mit der seitlichen Wandung verbunden, um nicht beim Eindrücken oder Herausziehen der Stulpe vom Schüttbehälter abgelöst zu werden. Die formschlüssige Verbindung ist auch vorteilhaft, wenn in dem Aufbewahrungsraum ein Unterdruck hergestellt werden soll, um die Haltbarkeit und Langzeitqualität des darin gelagerten Lebensmittels zu verbessern.

Nach einer Ausgestaltung der Erfindung sind in der Außenform des Schüttbehälters Vertiefungen in den Außenumfangsflächen ausgebildet. Über die Vertiefungen kann der Behälter sicherer erfasst und gehalten werden, insbesondere, wenn die Stulpe gedrückt oder gezogen wird. Die Vertiefungen können in den Flächen der seitlichen Wandung und/oder im Behälterboden ausgebildet sein.

Nach einer Ausgestaltung der Erfindung weist der Schüttbehälter und/oder das Dichtelement Oberflächenanteile auf, die aus einem weicheren Kunststoffmaterial hergestellt sind als die diese Oberflächenanteile umgebenden Oberflächen. Der Schüttbehälter kann rutschsicherer gehalten werden, wenn bestimmte, beim Zugreifen auf den Schüttbehälter und/oder das Dichtelement erfasste Bereiche aus einem weicheren Kunststoffmaterial hergestellt sind. Beim Dichtelement können die weicheren Bestandteile insbesondere im Kontaktbereich zur Stulpe den Kraft- und Formschluss zwischen diesen Bestandteilen erhöhen. Wenn der Schüttbehälter aus einem transparenten Material hergestellt ist, sind auf diese Weise auch Fingerabdrücke oder sonstiger Schmutz, der bei einer Berührung auf die Oberfläche des Schüttbehälters gelangen kann, weniger sichtbar. Die Herstellung von Kunststoffbehältern im 2-Komponenten-Spritzguss ist technisch gut beherrschbar.

Nach einer Ausgestaltung der Erfindung sind das Dichtelement mit der Stulpe und die Stulpe mit dem Schüttbehälter druck- und oder gasdicht verbindbar. Durch die gasdichte Verbindung wird verhindert, dass zwischen dem Aufbewahrungsraum des Schüttbehälters und der Umgebungsluft ein Gasaustausch stattfinden kann. Insbesondere sollte ein Austausch von Sauerstoff vermieden werden, der die Dauerhaltbarkeit von Lebensmitteln beeinträchtigen kann. Wenn der nach dem letzten Öffnen im Aufbewahrungsraum befindliche Sauerstoff durch chemische Umsetzungsprozesse und Reaktionen mit dem Lebensmittel verbraucht ist, kann ohne eine Öffnung des Dichtelements oder einem Entfernen der Stulpe kein neuer Sauerstoff mehr in den Aufbewahrungsraum gelangen, so dass dann die vom Sauerstoff abhängigen chemischen Prozesse gestoppt sind. Bei einem Unterdruck im Aufbewahrungsraum ist der Sauerstoffgehalt durch den geringeren Restluftanteil im Aufbewahrungsraum nochmals reduziert. Der Unterdruck kann über das druckdicht ausgeführte Dichtelement hergestellt werden, wenn dieses erst dann fest geschlossen wird, wenn durch Herunterdrücken der Stulpe in den Aufbewahrungsraum und ein eventuelles zusätzliches Zusammendrücken des Schüttbehälters Restluft aus dem Aufbewahrungsraum herausgedrückt worden ist. Bis zum festen Verschließen des Dichtelements kann noch Luft durch die Öffnung aus dem Aufbewahrungsraum nach außen entweichen.

Nach einer Ausgestaltung der Erfindung ist der Schüttbehälter zumindest teilweise aus einem transparenten Material und die Stulpe aus einem intransparenten Material hergestellt. Durch das transparente Material kann ein Benutzer schnell von außen erkennen, welches Lebensmittel sich in dem Schüttbehälter befindet und welche Menge davon noch vorhanden ist. Da durch das transparente Material aber auch Licht in den Aufbewahrungsraum fällt, durch das sich das darin aufbewahrte Lebensmittel erwärmen und/oder in seiner Qualität verschlechtern kann, ist es vorteilhaft, wenn über die aus einem intransparenten Material hergestellte Stulpe zumindest kein Licht von oben auf das im Schüttbehälter befindliche Lebensmittel fällt. Der Lichteinfall in den Aufbewahrungsraum wird zusätzlich verringert, wenn auch Teile der seitlichen Wandung des Schüttbehälters aus einem intransparenten Material bestehen.

Nach einer Ausgestaltung der Erfindung weist die Stulpe an ihrem ersten und/oder zweiten Ende ein versteifendes Element auf. Insbesondere dort, wo die Stulpe besonderen mechanischen Belastungen ausgesetzt ist, kann ein versteifendes Element die Funktion der Stulpe verbessern. So kann ein versteifendes Element im Bereich einer Anschlussverschraubung der Stulpe mit der seitlichen Wandung überhaupt erst eine Verschraubung möglich machen, indem beispielsweise in dem versteifenden Element das Schraubgewinde ausgebildet ist. Um übermäßige Biegeradien des elastischen Werkstoffs zu vermeiden, kann ein versteifendes Element auch nahe des Anschlusses an die seitliche Wandung so geformt sein, dass es sonst mögliche Biegeradien begrenzt. Im Bereich der Öffnung kann ein versteifendes Element die Befestigung eines Dichtelements ermöglichen. Das versteifende Element kann im Rahmen eines 2-Komponenten-Spritzgussverfahrens bei der Herstellung der Stulpe in diese eingebracht werden, oder das versteifende Element wird mit dem elastischen Werkstoff verklebt, verschmolzen oder auf sonstige Weise stofflich verbunden.

Nach einer Ausgestaltung der Erfindung weist die Stulpe in zumindest einem Bereich eine materialgeschwächte Knickstelle auf. Die Materialstärke der Stulpe muss nicht gleichmäßig dick ausgeführt sein. Es ist vorteilhaft, die Materialdicke in solchen Bereichen zu reduzieren, in denen eine zu große Materialstärke die Beweglichkeit einschränken oder behindern würde. In solchen Bereichen ist die Reduzierung der Materialstärke erforderlich, um die Stulpe möglichst leicht zwischen der eingedrückten und der herausgezogenen Position hin und her zu bewegen. Als Knickstelle ist nicht nur eine solche Stelle im Material der Stulpe gemeint, die in einem Winkel geknickt wird, sondern auch solche Stellen, in denen das Material der Stulpe einen gebogenen Verlauf darstellen soll.

Nach einer Ausgestaltung der Erfindung weist das Dichtelement oberhalb des Schaftabschnitts einen Anschlag auf. Der Anschlag verhindert, dass das Dichtelement zu weit durch die Öffnung in den Aufbewahrungsraum hineingeschoben werden kann.

Es wird ausdrücklich darauf hingewiesen, dass jede der vorstehend beschriebenen Ausgestaltungen der Erfindung jeweils für sich, aber auch in einer beliebigen Kombination untereinander mit dem Gegenstand des Hauptanspruches kombinier-bar ist, soweit dem keine technisch zwingenden Hindernisse entgegenstehen.

Weitere Abwandlungen und Ausgestaltungen der Erfindung lassen sich der nachfolgenden gegenständlichen Beschreibung und den Zeichnungen entnehmen.

Die Erfindung soll nun anhand eines Ausführungsbeispiels näher beschrieben werden. Es zeigen:
- Fig. 1:: eine Ansicht von schräg oben auf einen Schüttbehälter mit einer herausgezogenen Stulpe,
- Fig. 2:: den Schüttbehälter aus Fig. 1 mit einer in den Aufbewahrungsraum eingedrückten Stulpe,
- Fig. 3:: den Schüttbehälter aus Fig. 2 mit eingesetztem Dichtelement,
- Fig. 4:: eine Schnittansicht durch den in Fig. 1 gezeigten Schüttbehälter,
- Fig. 5:: eine Schnittansicht durch den in Fig. 3 gezeigten Schüttbehälter, und
- Fig. 6:: eine Schnittansicht durch den in Fig. 2 gezeigten Schüttbehälter.

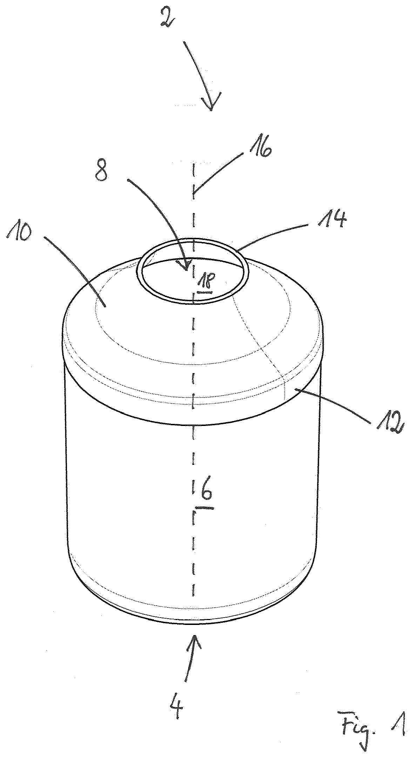

In Fig. 1 ist ein Schüttbehälter 2 aus einer Ansicht von schräg oben dargestellt. Der Schüttbehälter 2 weist einen Boden 4 mit einer seitlichen Wandung 6 auf. Nach oben hin ist der Schüttbehälter 2 durch die Öffnung 8 offen, die von der Stulpe 10 umgrenzt ist.

Die Stulpe 10 verfügt über ein erstes Ende, mit dem diese mit der seitlichen Wandung 6 verbunden ist. Das zweite Ende der Stulpe 10 umgrenzt die Öffnung 8. Die Stulpe 10 besteht aus einem elastischen Werkstoff, der es ermöglicht, dass die Stulpe 10 mit ihrem zweiten Ende 14 in den Aufbewahrungsraum 18 an der Längsachse 16 entlang hineingedrückt und von dort aus auch wieder in die in Fig. 1 dargestellte herausgezogene Position bewegt werden kann.

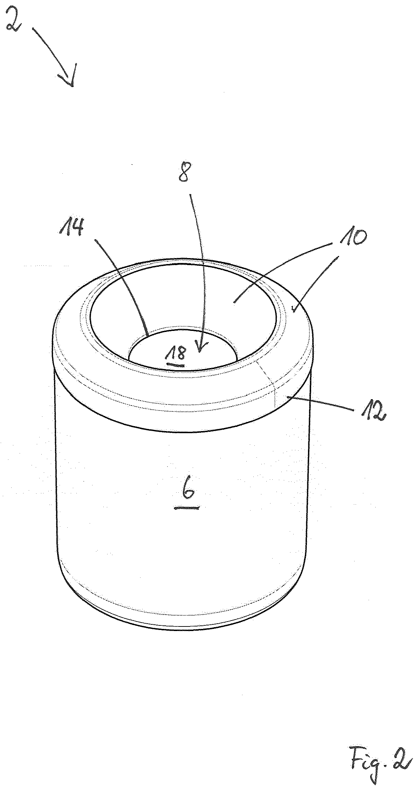

In Fig. 2 ist der Schüttbehälter 2 mit einer Stulpe 10 gezeigt, die in den Aufbewahrungsraum 18 hineingedrückt ist. Aus dem Vergleich der Stulpe 10, wie sie in den Figuren 1 und 2 dargestellt ist, wird erkennbar, dass die Stulpe 10 in der in Fig. 1 dargestellten Position einen Schütttrichter ausbildet, während sie in der in Fig. 2 dargestellten Position einen Befülltrichter schafft. Durch die Öffnung 8 kann also leicht ein Lebensmittel sowohl eingefüllt als auch wieder aus dem Aufbewahrungsraum 18 ausgeschüttet werden.

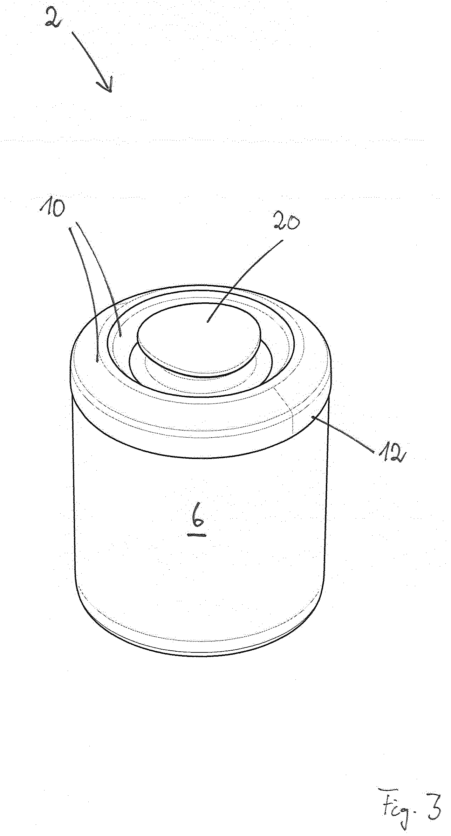

In Fig. 3 ist der Schüttbehälter 2 mit einem Dichtelement 20 dargestellt, das in die Öffnung 8 eingesteckt ist, während sich die Stulpe 10 in der eingedrückten Position befindet.

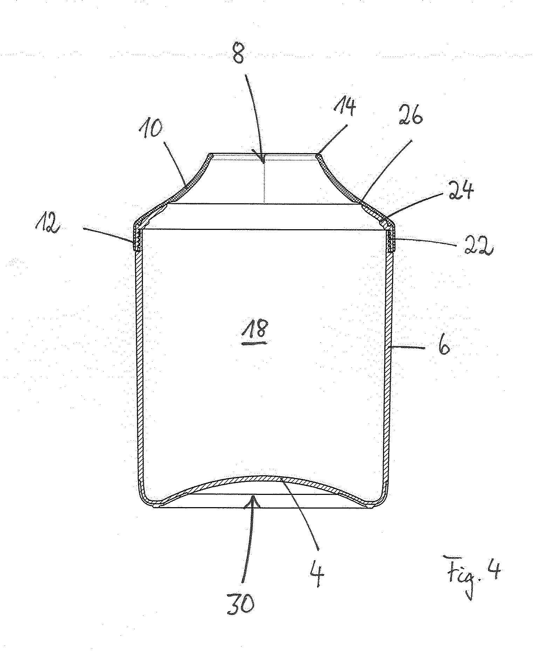

In der Fig. 4 ist eine Schnittansicht durch den in Fig. 1 gezeigten Schüttbehälter 2 gezeigt. In dieser Schnittansicht ist erkennbar, dass die Stulpe 10 über ein Gewinde 22 mit der seitlichen Wandung 6 verbunden ist. Die Stulpe 10 verfügt an ihrem ersten Ende 12 über ein Innengewinde, das an einem versteifenden Element 24 ausgebildet ist, das ein Bestandteil der Stulpe 10 in diesem Bereich bildet. Das versteifende Element 24 erstreckt sich nicht nur im Bereich des Gewindes 22, sondern auch darüber hinaus bis zu einer Knickstelle 26, an der die Materialdicke des Werkstoffs der Stulpe 10 eine Schwächung aufweist. Durch die Schwächung im Bereich der Knickstelle 26 kann das zweite Ende 14 der Stulpe 10 leichter in den Aufbewahrungsraum 18 hinein gedrückt werden.

In den Schnittansichten der Fig. 3 und 4 ist erkennbar, dass die Stulpe 10 in der Seitenansicht jeweils eine Art Kegelstumpfform zeigt.

Im Bereich des Bodens 4 verfügt der Schüttbehälter 2 außerdem von außen gesehen über eine als Einsenkung des Bodens 4 gestaltete Vertiefung 30, über die der Schüttbehälter 2 beim Schütten besser erfasst und gehalten werden kann.

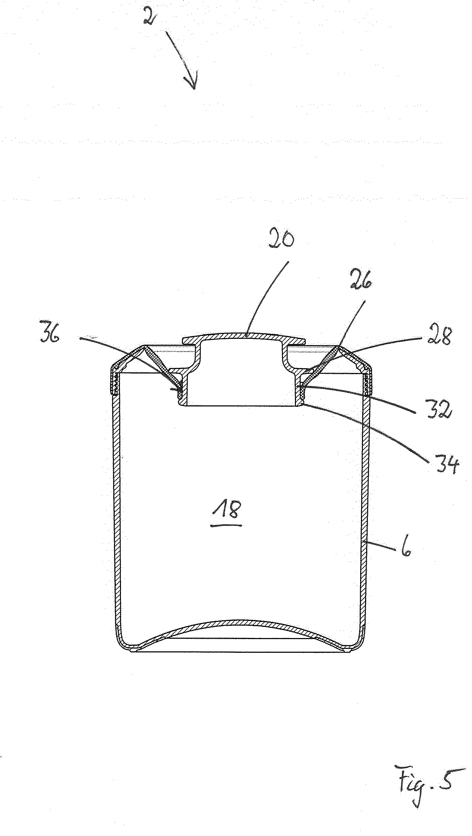

In Fig. 5 ist eine Schnittansicht durch den in Fig. 3 gezeigten Schüttbehälter gezeigt. In dieser Ansicht ist die Ausgestaltung des Dichtelements 20 genauer erkennbar. Das Dichtelement 20 verfügt über einen Schaftabschnitt 32, dessen nach außen weisende Oberfläche einen Bereich 36 aufweist, in dem sich eine dichtende Anlage des die Öffnung 8 umgebenden Materials der Stulpe 10 einstellt, wenn das Dichtelement in die Öffnung 8 eingesteckt ist. Das Dichtelement 20 verfügt über einen Anschlag 28, durch den verhindert wird, dass das Dichtelement 20 zu weit in die Öffnung 8 eingesteckt wird. Durch den Kontakt des Anschlags 28 an der Oberfläche der Stulpe 10 ergibt sich zudem eine stabilisierende Wirkung auf die Stulpe 10, wenn das Dichtelement 20 in die Öffnung 8 eingesteckt ist.

Damit das Dichtelement 20 besser in der Schließstellung gehalten ist, verfügt das Dichtelement 20 zusätzlich noch über eine Verdickung 34, die im Verhältnis zum Material der Stulpe 10 im Bereich des zweiten Endes 14 eine Art Hinterschnitt bildet. Beim Herausziehen des Dichtelements 20 aus der in Fig. 5 dargestellten Position wird zunächst die Stulpe 10 aus der in den Aufbewahrungsraum 18 hineingedrückten Position in die aus dem Aufbewahrungsraum 18 herausgezogenen Position mitgenommen. Wenn die Stulpe 10 ihre Endposition erreicht hat, kann durch einen weiteren Zug an dem Dichtelement 20 das Dichtelement aus der Öffnung 8 herausgezogen werden. Beim Verschließen der Öffnung 8 erfolgt der vorstehend beschriebene Ablauf in umgekehrter Reihenfolge, indem die Stulpe 10 erst mit dem Dichtelement 20 nach unten gedrückt wird, bis die Stulpe 10 ihre Endlage erreicht hat und dann das Dichtelement 20 vollständig in seine Verschlusslage gedrückt wird. Von diesen Bewegungsabläufen kann natürlich auch abgewichen werden.

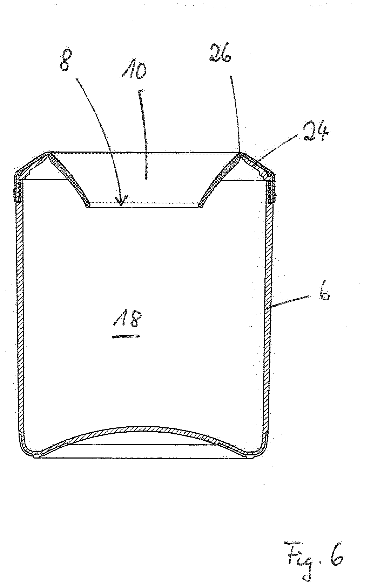

In Fig. 6 ist eine Schnittansicht durch den in Fig. 2 gezeigten Schüttbehälter gezeigt. Hier befindet sich die Stulpe 10 in der eingedrückten Stellung. In dieser Stellung ist gut erkennbar, dass die Stulpe 10 im Bereich der Knickstelle 26 abgeknickt ist. Auch ist gut die Trichterform erkennbar, die die Stulpe 10 in dieser Position ausbildet. In dieser Schnittansicht ist gut erkennbar, dass der Aufbewahrungsraum 18 leicht von oben durch ein Aufschütten des Lebensmittels auf die Oberfläche der Stulpe 10 befüllt werden kann.

Das vorstehend beschriebene Ausführungsbeispiel dient nur der Erläuterung der Erfindung. Die Erfindung ist nicht auf das Ausführungsbeispiel beschränkt. Dem Fachmann bereitet es keine Schwierigkeiten, das Ausführungsbeispiel auf eine ihm als geeignet erscheinende Weise abzuändern, um es an einen konkreten Anwendungsfall anzupassen.

## Patentansprüche

1. Schüttbehälter (2) zur Aufbewahrung rieselfähiger Lebensmittel mit einem Boden (4), einer einen Aufbewahrungsraum (18) umgebenden seitlichen Wandung (6), einer oberen Öffnung (8) und einem Dichtelement (20), wobei auf den Schüttbehälter (2) eine Stulpe (10) aus einem elastischen Werkstoff aufgesetzt ist, deren erstes Ende (12) mit der seitlichen Wandung (6) des Schüttbehälters (2) verbunden ist und deren zweites Ende (14) die Öffnung (8) umgrenzt, die mit dem Dichtelement (20) verschließbar ist, wobei sich die Breite der Stulpe (10) von ihrem ersten Ende (12) zum zweiten Ende (14) entlang der Längsachse (16) des Schüttbehälters (2) verringert, und wobei die Stulpe (10) durch die Elastizität des elastischen Werkstoffs entlang der Längsachse (16) des Schüttbehälters (2) in den Aufbewahrungsraum (18) eindrückbar und aus diesem wieder herausziehbar ist, **dadurch gekennzeichnet, dass** das Dichtelement (20) als ein in die Öffnung (8) einsetzbarer Stopfen ausgebildet ist, der einen Schaftabschnitt (32) aufweist, dessen Form und Größe an die Form und Größe der Öffnung (8) so angepasst ist, dass sich im Bereich (36) des Schaftabschnitts eine dichtende Anlage der Oberfläche des Schaftabschnitts (32) an die Oberflächen des an die Öffnung (8) angrenzenden Materials der Stulpe (10) einstellt, und der Schaftabschnitt (32) an seinem dem Aufbewahrungsraum (18) zugewandten Ende eine Verdickung (34) im Verhältnis zu seiner Form im Bereich (36) der dichtenden Anlage des angrenzenden Materials der Stulpe (10) aufweist.

2. Schüttbehälter (2) nach Anspruch 1, **dadurch gekennzeichnet, dass** die Stulpe (10) formschlüssig mit der seitlichen Wandung (6) des Schüttbehälters (2) verbunden ist.

3. Schüttbehälter (2) nach Anspruch 1 oder 2, **dadurch gekennzeichnet**, dassin der Außenform des Schüttbehälters (2) Vertiefungen (30) in den Außenumfangsflächen ausgebildet sind.

4. Schüttbehälter (2) nach einem der vorhergehenden Ansprüche, **dadurch gekennzeichnet, dass** der Schüttbehälter (2) und/oder das Dichtelement (20) Oberflächenanteile aufweist, die aus einem weicheren Kunststoffmaterial hergestellt sind als die diese Oberflächenanteile umgebenden Oberflächen.

5. Schüttbehälter (2) nach einem der vorhergehenden Ansprüche, **dadurch gekennzeichnet, dass** das Dichtelement (20) mit der Stulpe (10) und die Stulpe (10) mit dem Schüttbehälter (2) druckdicht verbindbar sind.

6. Schüttbehälter (2) nach einem der vorhergehenden Ansprüche, **dadurch gekennzeichnet, dass** der Schüttbehälter (2) zumindest teilweise aus einem transparenten Material und die Stulpe (10) aus einem intransparenten Material hergestellt ist.

7. Schüttbehälter (2) nach einem der vorhergehenden Ansprüche, **dadurch gekennzeichnet, dass** die Stulpe (10) an ihrem ersten und/oder zweiten Ende (12, 14) ein versteifendes Element (24) aufweist.

8. Schüttbehälter (2) nach einem der vorhergehenden Ansprüche, **dadurch gekennzeichnet, dass** die Stulpe (10) in zumindest einem Bereich eine materialgeschwächte Knickstelle (26) aufweist.

9. Schüttbehälter (2) nach einem der vorhergehenden Ansprüche, **dadurch gekennzeichnet, dass** das Dichtelement (20) oberhalb des Schaftabschnitts einen Anschlag (28) aufweist.

## Claims

1. Bulk container (2) for storing flowable food, comprising a base (4), a lateral wall (6) surrounding a storage space (18), an upper opening (8), and a sealing element (20), a cuff (10) made of an elastic material being placed on the bulk container (2), the first end (12) of said cuff being connected to the lateral wall (6) of the bulk container (2), and the second end (14) of said cuff defining the opening (8) which can be closed by means of the sealing element (20), the width of the cuff (10) decreasing from its first end (12) to the second end (14) along the longitudinal axis (16) of the bulk container (2), and it being possible, due to the elasticity of the elastic material, to press the cuff (10) along the longitudinal axis (16) of the bulk container (2) into the storage space (18) and to pull the cuff out of said space again, **characterised in that** the sealing element (20) is formed as a plug which can be inserted into the opening (8) and which has a shaft portion (32), the shape and size of which are adapted to the shape and size of the opening (8) such that, in the region (36) of the shaft portion, the surface of the shaft portion (32) sealingly abuts the surfaces of the material of the cuff (10) that is adjacent the opening (8), and, on the end of the shaft portion (32) that faces the storage space (18), the shaft portion (32) has a thickened region (34) relative to the shape of said portion in the region (36) of the sealing abutment of the adjacent material of the cuff (10).

2. Bulk container (2) according to claim 1, **characterised in that** the cuff (10) is connected to the lateral wall (6) of the bulk container (2) in a form-fitting manner.

3. Bulk container (2) according to either claim 1 or claim 2, **characterised in that** recesses (30) are formed in the outer circumferential surfaces in the external shape of the bulk container (2).

4. Bulk container (2) according to any of the preceding claims, **characterised in that** the bulk container (2) and/or the sealing element (20) has surface portions which are made of a softer plastics material than the surfaces surrounding these surface portions.

5. Bulk container (2) according to any of the preceding claims, **characterised in that** the sealing element (20) can be connected to the cuff (10) in a pressure-tight manner, and the cuff (10) can be connected to the bulk container (2) in a pressure-tight manner.

6. Bulk container (2) according to any of the preceding claims, **characterised in that** the bulk container (2) is made at least in part of a transparent material and the cuff (10) is made of an non-transparent material.

7. Bulk container (2) according to any of the preceding claims, **characterised in that** the cuff (10) has a stiffening element (24) at its first and/or second end (12, 14).

8. Bulk container (2) according to any of the preceding claims, **characterised in that** the cuff (10) has a bending point (26) in least one region, at which point the material is weakened.

9. Bulk container (2) according to any of the preceding claims, **characterised in that** the sealing element (20) has a stop (28) above the shaft portion.

## Revendications

1. Conteneur (2) destiné à stocker des produits alimentaires pouvant s'écouler, avec un fond (4), une paroi latérale (6) entourant un espace de stockage (18), une ouverture supérieure (8) et un élément d'étanchéité (20), dans lequel un fourreau (10) en un matériau élastique est monté sur le conteneur (2), dont la première extrémité (12) est reliée à la paroi latérale (6) du conteneur (2), et dont la seconde extrémité (14) délimite l'ouverture (8), qui peut être fermée avec l'élément d'étanchéité (20), dans lequel la largeur du fourreau (10) de sa première extrémité (12) à sa seconde extrémité (14) diminue le long de l'axe longitudinal (16) du conteneur (2), et dans lequel le fourreau (10) peut être introduit dans l'espace de stockage (18) et également retiré de celui-ci grâce à l'élasticité du matériau élastique le long de l'axe longitudinal (16) du conteneur (2), **caractérisé en ce que** l'élément d'étanchéité (20) est conçu sous la forme d'un bouchon pouvant être inséré dans l'ouverture (8), qui présente une section d'arbre (32), dont la forme et la taille sont adaptées à la forme et à la taille de l'ouverture (8) de sorte que dans la région (36) de la section d'arbre est ajustée une caractéristique d'étanchéité de la surface de la section d'arbre (32) sur les surfaces du matériau délimitant l'ouverture (8) du fourreau (10), et la section d'arbre (32) présente un épaississement (34) en rapport avec sa forme dans la région (36) de la caractéristique d'étanchéité du matériau de délimitation du fourreau (10), au niveau de son extrémité faisant face à l'espace de stockage (18).

2. Conteneur (2) selon la revendication 1, **caractérisé en ce que** le fourreau (10) est relié par complémentarité de forme à la paroi latérale (6) du conteneur (2).

3. Conteneur (2) selon la revendication 1 ou 2, **caractérisé en ce que** dans la forme extérieure du conteneur (2), des évidements (30) sont formés dans les surfaces périphériques extérieures.

4. Conteneur (2) selon l'une quelconque des revendications précédentes, **caractérisé en ce que** le conteneur (2) et/ou l'élément d'étanchéité (20) présente(nt) des parties de surface, qui sont constituées d'une matière plastique plus souple que les surfaces entourant ces parties de surface.

5. Conteneur (2) selon l'une quelconque des revendications précédentes, **caractérisé en ce que** l'élément d'étanchéité (20) avec le fourreau (10) et le fourreau (10) avec le conteneur (2) peuvent être raccordés de manière étanche à la pression.

6. Conteneur (2) selon l'une quelconque des revendications précédentes, **caractérisé en ce que** le conteneur (2) est constitué au moins partiellement d'un matériau transparent et le fourreau (10) est constitué d'un matériau non transparent.

7. Conteneur (2) selon l'une quelconque des revendications précédentes, **caractérisé en ce que** le fourreau (10) présente un élément de renfort (24) au niveau de sa première et/ou de sa seconde extrémité (12, 14) .

8. Conteneur (2) selon l'une quelconque des revendications précédentes, **caractérisé en ce que** le fourreau (10) présente dans au moins une région un point de pliure (26) à affaiblissement de matériau.

9. Conteneur (2) selon l'une quelconque des revendications précédentes, **caractérisé en ce que** l'élément d'étanchéité (20) présente une butée (28) au-dessus de la section d'arbre.
